# EUROPÄISCHE PATENTSCHRIFT

(11) **EP 3 576 923 B1**
(45) Veröffentlichungstag und Bekanntmachung des Hinweises auf die Patenterteilung: **17.08.2022**
(21) Anmeldenummer: 18701762.9
(22) Anmeldetag: 30.01.2018
(51) Int. Cl.: B29C 44/46, B29K 75/00, B05B 1/14, B29C 44/32, B05B 7/00, B05B 7/24, B05B 13/02

(54) **VERFAHREN UND VORRICHTUNG ZUR HERSTELLUNG VON SCHAUM-VERBUNDELEMENTEN**
METHOD AND SYSTEM FOR THE PREPARATION OF FOAM COMPOSITE ELEMENTS
PROCÉDÉ ET SYSTÈME DE FABRICATION D'ÉLÉMENTS COMPOSITES EN MOUSSE

(30) Priorität: 31.01.2017 EP 17154065
(43) Veröffentlichungstag der Anmeldung: 11.12.2019
(73) Patentinhaber: Covestro Intellectual Property GmbH & Co. KG, 51373 Leverkusen (DE)
(72) Erfinder: KOESTER, Ralf, 51379 Leverkusen (DE); SOBIK, Heinrich-Peter, 51375 Leverkusen (DE); KÜNZEL, Uwe, 51377 Leverkusen (DE); RÜB, Thomas, 51375 Leverkusen (DE); LÖVENICH, Catherine, 51469 Bergisch Gladbach (DE)
(74) Vertreter: Levpat
(86) Internationale Anmeldenummer: PCT/EP2018/052223
(87) Internationale Veröffentlichungsnummer: WO 2018/141720

(56) Entgegenhaltungen:
- EP-A1- 2 614 943
- EP-A2- 0 553 695
- WO-A-2016/037842
- GB-A- 2 159 459
- US-A- 4 572 435
- US-A- 5 846 462
- US-A1- 2016 144 540

## Beschreibung

Die vorliegende Erfindung betrifft ein Verfahren und eine Vorrichtung zum Auftragen einer schäumbaren Reaktionsmischung auf ein sich bewegendes Deckschicht, wobei die Reaktionsmischung aus Austragsöffnungen auf die Deckschicht aufgetragen wird und die Deckschicht sich mit einer Geschwindigkeit von ≥ 15 Metern pro Minute relativ zu den Austragsöffnungen bewegt.

Verbundelemente aus einer Deckschicht und einem Isolierkern werden heutzutage in vielen Industriebereichen eingesetzt. Der grundlegende Aufbau solcher Verbundelemente besteht dabei aus einer Deckschicht, auf welche ein isolierend wirkender Werkstoff aufgebracht wird. Als Deckschichten können dabei beispielsweise Bleche aus beschichtetem Stahl, Edelstahl, Aluminium, Kupfer oder Legierungen der beiden letztgenannten eingesetzt werden. Darüber hinaus können auch Dämmplatten aus einer Kombination aus Deckschichten und Isolierkern hergestellt werden. Es können Kunststofffolien, Aluminiumfolien, Holz, Glasfaser- oder Mineralfaservliese sowie cellulosehaltige Materialien wie Papier, Pappe oder Pappmaché als Deckschichtmaterialien eingesetzt werden. Oft werden Mehrschichtdeckschichten aus z. B. Aluminium und Papier verwendet. Die Wahl des geeigneten Deckschichtmaterials hängt dabei von dem beabsichtigten Einsatzgebiet der Verbundelemente oder Dämmplatte und den sich daraus ergebenden Materialanforderungen ab. Als Isolierkern können insbesondere Schaumstoffe auf Basis von Polyurethan (PUR) und/oder Polyisocyanurat (PIR) eingesetzt werden.

Dämmplatten werden häufig im Haus- oder Wohnungs-Bau eingesetzt. Neben der Verwendung von Verbundelementen zur Isolierung von beispielsweise Kühlhäusern finden sie auch immer häufiger Anwendung als Fassadenelemente an Gebäuden oder als Elemente von Industrietüren wie beispielsweise Sektionaltore. Entsprechende Verbundelemente, im Folgenden auch als Sandwich-Verbundelemente bezeichnet, zeigen durch ihre Deckschicht eine dem verwendeten Material entsprechende Stabilität und Oberflächengestaltung, während der aufgebrachte Schaumstoff entsprechende wärmeisolierende Eigenschaften verleiht.

Zur Herstellung entsprechender Dämmplatten oder Verbundelemente wird auf eine bereitgestellte Deckschicht ein schäumendes Reaktionsgemisch mittels einer Auftragsvorrichtung aufgebracht. Hierzu werden zum Beispiel bei der Verwendung von Schaumstoffen auf Basis von Isocyanaten die entsprechenden Polyol-Komponenten und Isocyanat-Komponenten miteinander gemischt und auf die Deckschicht aufgetragen, auf welcher sie aufschäumen und aushärten.

Als Auftragsvorrichtung zur Aufbringung des schäumenden Reaktionsgemisches auf die Deckschicht kommen häufig Rohre zum Einsatz, welche entlang ihrer Längserstreckung mit einer Mehrzahl von Bohrungen versehen sind, aus welchen das in das Rohr eingebrachte Reaktionsgemisch austreten kann. Solche Rohre werden üblicherweise als Gießharken bezeichnet. Für schnell laufende Produktionsverfahren für derartige Verbundelemente, sogenannte Schnellläufer, ist eine Technologie namens "6-Finger-Laydown" bekannt. Diese auch als "American" oder "US"-Technologie bezeichnete Vorgehensweise benutzt drei Mischköpfe mit jeweils zwei Austragsvorrichtungen pro Mischkopf. Man hat hier durch die drei Produktströme eventuell sehr unterschiedliche Auftragsmischungen (Reaktionsaktivitätszustände) über die Breite der Produktionsanlage, die zu Problemen mit zum Beispiel Abbläsern, Lunkern etc. führen können. Zusätzlich hat man oft Probleme mit dem Ver- und Ineinander-Laufen des aufsteigenden Reaktionsgemischs, was zu Dimensionsproblemen führen kann. Bei drei Mischköpfen mit ihren sechs Produktströmen können die ausgehärteten Schaumstränge im Endprodukt noch optisch wahrgenommen werden, was als nachteilig angesehen wird. WO2016/037842 A offenbart eine optimierte Gießharke.

EP 1 857 248 A2 beschreibt eine Auftragsvorrichtung zur Herstellung von über die Reaktionsfläche gleichzeitig auftragenden und gleichmäßig aufschäumenden Schäumen, wobei die Vorrichtung einen Mischkopf, einen Verteilerkopf , mindestens 3 oder mehr an den Verteilerkopf angebrachte, Auslaufleitungen , die quer zur Ausströmrichtung an einem Gestell, das starr ist, befestigt sind, enthält. Eine Vorrichtung zur Herstellung von Sandwich-Verbundelementen oder Dämmplatten wird ebenfalls offenbart, welche wenigstens zwei Zuführvorrichtungen für eine obere und eine untere Deckschicht, ein umlaufendes Band zur Führung der Deckschichten, an die eine Auftragsvorrichtung für eine geschäumte Kernschicht, eine Formstrecke und eine Ablängvorrichtung hintereinander geschaltet sind.

WO 2010/089041 A2 offenbart eine Vorrichtung zum Auftragen von schäumbaren Reaktionsmischungen umfassend einen Mischkopf, einen strömungstechnisch hinter dem Mischkopf liegenden Verteilerkopf, mindestens drei an dem Verteilerkopf angebrachte Austrittleitungen, eine Zuleitung einer Komponente A zum Mischkopf, eine Zuleitung einer Komponente B zum Mischkopf, mindestens einen Statikmischer zur Durchmischung eines inerten Gases und der Komponente A, der Komponente B oder eines Gemisches der Komponenten A und B, mindestens eine Zuleitung auf der Hochdruckseite für das unter erhöhtem Druck stehende inerte Gas und mindestens eine Mess- und Regeleinheit zur Einstellung der gewünschten Drücke der Komponenten am Mischkopf.

EP 2 233 271 A1 betrifft eine Vorrichtung zum Auftrag von aufschäumenden Reaktionsgemischen umfassend (a) einen Mischkopf zum Vermischen von Rohmaterialien zur Herstellung des Schaums, (b) einen strömungstechnisch hinter dem Mischkopf liegenden Verteilerkopf, (c) mindestens drei an dem Verteilerkopf angebrachte Schlauchleitungen und (d) mindestens drei stationäre Gießharken zum Auftragen des Gemischs der Rohmaterialien zur Schaumbildung auf ein bewegtes Deckschicht.

EP 2 614 944 A1 beschreibt eine Vorrichtung zum Auftragen eines aufschäumenden Reaktionsgemisches auf eine Deckschicht , insbesondere zur Herstellung eines Verbundelementes, umfassend mindestens eine Gießharke mit einem rohrförmigen Hohlkörper, welcher Hohlkörper sich entlang einer Mittelachse erstreckt und wenigstens zwei Austrittsöffnungen zum Austritt des aufschäumenden Reaktionsgemisches aufweist, und wobei die Gießharke und die Deckschicht in einer Längsachse relativ zueinander bewegbar sind. Die Mittelachs der mindestens einen Gießharke und die Längsachse der Bewegung schließen einen Winkel von ≤ 80° zueinander ein.

EP 2 804 736 A1 offenbart eine Vorrichtung zum Auftragen eines aufschäumenden Reaktionsgemisches auf eine Deckschicht, insbesondere zur Herstellung eines Verbundelementes, mindestens umfassend zwei Gießharken mit jeweils einem rohrförmigen Hohlkörper, welcher Hohlkörper sich entlang einer Mittelachse erstreckt und wenigstens zwei Austrittsöffnungen zum Austritt des aufschäumenden Reaktionsgemisches aufweist, wobei die Gießharken und die Deckschicht in einer Längsachse relativ zueinander bewegbar sind und wobei die Gießharken an einem Aufnahmeelement angeordnet sind. Die Anordnung der Gießharken am Aufnahmeelement weist jeweils ein Gelenk auf, mittels dem die Gießharken beweglich am Aufnahmeelement angeordnet sind und in einem Winkel von ≤ 80° zur Längsachse der Bewegung ausrichtbar sind.

Als alternative Auftragstechnologie kann die sogenannte Kalibrierung verwendet werden. Diese führt zwar zu einer sehr hohe optischen Qualität, aber die Beherrschung des Verfahrens in der Produktion ist sehr schwierig.

Die vorliegende Erfindung hat sich die Aufgabe gestellt, die Nachteile im Stand der Technik zumindest teilweise zu beheben. Insbesondere hat sie sich die Aufgabe gestellt, eine homogenere Produktqualität über die Breite einer Dämmplatte oder eines Schaum-Verbundelements zu erreichen.

Erfindungsgemäß gelöst wird die Aufgabe durch ein Verfahren gemäß Anspruch 1 und eine Vorrichtung gemäß Anspruch 4. Vorteilhafte Weiterbildungen sind in den Unteransprüchen angegeben.

Die Erfindung betrifft ein Verfahren zum Auftragen einer schäumbaren Reaktionsmischung auf ein sich bewegendes Deckschicht, wobei die Reaktionsmischung aus Austragsöffnungen auf die Deckschicht aufgetragen wird und die Deckschicht sich mit einer Geschwindigkeit von ≥ 15 Metern pro Minute relativ zu den Austragsöffnungen bewegt, wobei die Reaktionsmischung aus ≥ 7 Austragsöffnungen gleichzeitig auf die Deckschicht aufgetragen wird.

Durch eine Verbesserung der Vorverteilung des Reaktionsgemischs in den Inhalt dieser Erfindung lässt sich der Prozess wesentlich einfacher steuern und führt nach einer kürzeren Anlaufphase in der Produktion zu einer besseren Produktqualität.

Das erfindungsgemäße Verfahren ist vorzugsweise ein kontinuierliches Verfahren. Es eignet sich zur Herstellung von Schaum-Verbundelementen wie Dämmplatten in schnell laufender Produktionsweise. Die Deckschichtgeschwindigkeit beträgt dickenabhängig beispielsweise ≥ 10 bis ≤ 70 Meter pro Minute, vorzugsweise ≥ 15 Meter pro Minute, mehr bevorzugt ≥ 30 Meter pro Minute.

Als Deckschicht oder Substrat eignen sich beispielsweise Metall-Folien, insbesondere AluminiumFolien, Mehrschichtdeckschichten, z. B. aus Aluminium und Papier, und Kunststoff-Folien. Die Breite der Deckschicht ist grundsätzlich nicht beschränkt. Beispielsweise kann die Deckschicht eine Breite zwischen 1000 und 1300 mm aufweisen, aber auch 2400 mm Breite sind möglich.

Als Reaktionsmischung kommt insbesondere eine zu einem Polyurethan- und/oder Polyisocyanuratschaum reagierende Mischung in Frage. In einer Ausführungsform des erfindungsgemäßen Verfahrens umfasst daher die Reaktionsmischung ein Polyol A), ein Polyisocyanat B), gegebenenfalls Additive wie z. B. Stabilisatoren und Katalysatoren, gegebenenfalls ein oder mehrere Flammschutzmittel und ein (oder mehrere) Treibmittel C).

Vorzugsweise ist das Polyol A) ausgewählt aus der Gruppe der Polyetherpolyole, Polyesterpolyole, Polycarbonatpolyole und /oder Polyetheresterpolyole. Die OH-Zahl des eingesetzten Polyols oder der eingesetzten Polyole kann beispielsweise > 100 mg KOH/g bis < 800 mg KOH/g betragen und die durchschnittliche OH-Funktionalität des eingesetzten Polyols oder der der eingesetzten Polyole ist ≥ 2. Die OH-Zahl gibt im Falle eines einzelnen zugesetzten Polyols dessen OH-Zahl an. Im Falle von Mischungen wird die mittlere OH-Zahl angegeben. Dieser Wert kann anhand von DIN 53240-2 (1998) bestimmt werden. Die durchschnittliche OH-Funktionalität der Polyole liegt beispielsweise in einem Bereich von ≥ 2 bis < 6.

Verwendbare Polyetherpolyole sind beispielsweise Polytetramethylenglykolpolyether, wie sie durch Polymerisation von Tetrahydrofuran mittels kationischer Ringöffnung erhältlich sind. Ebenfalls geeignete Polyetherpolyole sind Additionsprodukte von Styroloxid, Ethylenoxid, Propylenoxid, Butylenoxide und oder Epichlorhydrin an di- oder polyfunktionelle Startermoleküle. Meistens werden Polyetherpolyole mit Ethylenoxid oder Propylenoxid als Kettenverlängerer verwendet.

Geeignete Startermoleküle sind zum Beispiel Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, 1,4-Butandiol, 1,6-Hexandiol sowie niedermolekulare, Hydroxylgruppen aufweisende Ester derartiger Polyole mit Dicarbonsäuren.

Verwendbare Polyesterpolyole sind unter Anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,3-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure oder Trimellithsäure eingesetzt werden. Als Säurequelle können auch die entsprechenden Anhydride verwendet werden.

Sofern die mittlere Funktionalität des zu veresternden Polyols > 2 ist, können zusätzlich auch Monocarbonsäuren wie Benzoesäure und Hexancarbonsäure mit verwendet werden. Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen oder aus Kohlendioxid erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit > 4 bis < 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit > 1 bis < 4 Kohlenstoffatomen eingesetzt werden.

Beispiele von geeigneten Polyisocyanaten B) sind 1,4-Butylendiisocyanat, 1,5-Pentandiisocyanat, 1,6- Hexamethylendiisocyanat (HDI), Isophorondiisocyanat (IPDI), 2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclobexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe (polymeres MDI, pMDI), 1,3- und/oder 1,4-Bis-(2-isocyanato-prop-2-yl)-benzol (TMXDI), 1 ,3-Bis-(isocyanatomethyl)benzol (XDI), sowie Alkyl-2,6-diisocyanatohexanoate (Lysindiisocyanate) mit C1 bis C6-Alkylgruppen.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 110 bis 600 führen. Bevorzugt zwischen 115 und 400. Diese Kennzahl kann auch in einem Bereich von > 180:100 bis < 330:100 oder aber auch von > 90:100 bis < 140:100 liegen.

Die Reaktionsmischung enthält weiterhin so viel Treibmittel C), wie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Komponente A. Als Treibmittel werden vorzugsweise physikalische Treibmittel ausgewählt aus wenigstens einem Mitglied der Gruppe bestehend aus Kohlenwasserstoffen, halogenierten Ethern und perfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Isocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cycloPentan, Butan, Isobutan), Ethern (z. B. Methylal), halogenierten Ethern, perfluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird Cyclopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen. Mit dem erfindungsgemäßen Verfahren lassen sich (hydro)fluorierte Olefine in vorteilhafter Weise als Treibmittel für Verbundsysteme einsetzen, da sich im Vergleich zu mit anderen Auftragstechniken hergestellten Verbundelementen Verbundelemente mit besseren Oberflächenstrukturen und verbesserter Haftung zur Deckschicht herstellen lassen.

Zusätzlich oder auch statt der oben aufgeführten physikalischen Treibmittel können auch chemische Treibmittel (auch "Co- Treibmittel") verwendet werden. Bei diesen handelt es sich besonders bevorzugt um Wasser und / oder Ameisensäure. Vorzugsweise werden die chemischen Treibmittel zusammen mit physikalischen Treibmitteln verwendet. Bevorzugt werden die Co-Treibmittel in einer Menge bis 6 Gew.-%, besonders bevorzugt 0,5 bis 4 Gew.-% für die Verbundelemente, bezogen auf die Gesamtmenge an Verbindungen mit gegenüber Isocyanatgruppen reaktiven Wasserstoffatomen in der Komponente A.

Bevorzugt wird für Verbundelemente eine Mischung aus 0 und 6,0 Gew.-% an Co-Treibmittel und 1,0 bis 30,0 Gew.-% an Treibmittel, jeweils bezogen auf 100 Gew.-% der Komponente A, eingesetzt. Das Mengenverhältnis von Co-Treibmittel zu Treibmittel kann aber auch je nach Bedarf von 1:7 bis 1:35 betragen.

Das Reaktionsgemisch enthält weiterhin gegebenenfalls eine Katalysatorkomponente D), welche geeignet ist, die Treibreaktion, die Urethanreaktion und / oder die Isocyanuratreaktion (Trimerisierung) zu katalysieren. Die Katalysatorkomponenten können dem Reaktionsgemisch zudosiert oder auch ganz oder teilweise in der Isocyanat-reaktiven Komponente A) vorgelegt werden.

Hierfür geeignet sind insbesondere eine oder mehrere katalytisch aktive Verbindungen ausgewählt aus den folgenden Gruppen:
D1) Aminische Katalysatoren, z.B. Amidine, wie 2,3-Dimethyl-3,4,5,6-tetrahydropyrimidin, tertiäre Amine, wie Triethylamin, Tributylamin, Dimethylcyclohexylamin, Dimethylbenzylamin, N-Methyl-, N-Ethyl-, N-Cyclohexylmorpholin, N,N,N',N'- Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N"-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,

In einer besonders bevorzugten Ausführungsform werden in der Katalysatorkomponente ein oder mehrere aminische Verbindungen gemäß folgender Struktur eingesetzt:

(CH₃)₂N-CH₂-CH₂-X-CH₂-CH₂-Y

wobei Y = NR₂ oder OH, vorzugsweise Y = N(CH₃)₂ oder OH, besonders bevorzugt Y = N(CH₃)₂ und wobei X= NR oder O, vorzugsweise X= N-CH₃ oder O, besonders bevorzugt X= N-CH₃. Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

D2) Carboxylate von Alkali- oder Erdalkalimetallen, insbesondere Natriumacetat, Natriumoctoat, Kaliumacetat, Kaliumoctoat, sowie Zinncarboxylate, z.B.. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und Dioctylzinndiacetat. und Ammoniumcarboxylate. Insbesondere bevorzugt sind Natrium-, Kalium- und Ammoniumcarboxylate. Bevorzugte Carboxylate sind Formiate, Ethylhexanoate (=Octoate) und Acetate.

Bevorzugt enthält der Katalysator einen oder mehrere Katalysatoren ausgewählt aus der Gruppe bestehend aus Kaliumacetat, Kaliumoctoat, Pentamethyldiethylentriamin, N,N',N"-Tris-(dimethylaminopropyl)hexahydrotriazin, Tris(dimethylaminomethyl)phenol, Bis[2-(N,N-dimethylamino)ethyl] ether und N,N-Dimethylcyclohexylamin, besonders bevorzugt aus Pentamethyldiethylentriamin, N,N',N"-Tris-(dimethylaminopropyl)hexahydrotriazin und N,N-Dimethylcyclohexylamin, besonders besonders bevorzugt aus Pentamethyldiethylentriamin, N,N',N"-Tris-(dimethylaminopropyl)hexahydrotriazin und N,N-Dimethylcyclohexylamin in Kombination mit Kaliumacetat, Kaliumoctoat oder Kaliumformiat oder Natriumformiat

Die zur Herstellung des Hartschaumstoffes nötigen Katalysatoren, insbesondere aminische Katalysatoren (D1) in Kombination mit als Trimerisationskatalysatoren eingesetzten Salze, werden in einer bevorzugten Ausführungsform in solcher Menge eingesetzt, dass z.B. auf kontinuierlich produzierenden Anlagen Elemente mit flexiblen Deckschichten mit Geschwindigkeiten bis zu 80 m/min je nach Elementstärke produziert werden können.

Die Reaktivität der Reaktionsmischung wird i.d.R. mittels Katalysator (oder über andere die Reaktivität erhöhende Komponenten, z.B. Aminopolyether), auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist. Typische Startzeiten (gekennzeichnet durch den Beginn des Aufschäumens der Reaktionsmischung bei visueller Beurteilung) für die Verarbeitung mittels konventioneller Technik liegen im Bereich von 2s bis 50s.

Mittels erfindungsgemäßem Verfahren lassen sich nun auch Reaktionsgemische mit hohen bzw. höheren Reaktivitäten, d.h. Startzeiten von <5s, insbesondere <2s, ganz besonders < 1s und Abbindezeiten von <25 s, insbesondere <20s und ganz besonders < 14s vorteilhaft verarbeiten. Das erfindungsgemäße Verfahren kann insbesondere für die Herstellung von dünnen Platten vorteilhaft sein, da hier wenig Material für das Zusammenfließen zur Verfügung steht.

Bevorzugt wird eine Kombination aus Katalysatorkomponenten D1 und D2 in dem Reaktionsgemisch verwendet. In diesem Fall sollte das molare Verhältnis so gewählt sein, dass das Verhältnis von D2/D1 zwischen 0,1 und 80 liegt, insbesondere zwischen 2 und 20. Kurze Abbindezeiten können zum Beispiel mit mehr als 0,9 Gew.-% Kalium-2-ethylhexanoat bezogen auf alle Komponenten des Reaktionsgemisches erzielt werden.

Es ist erfindungsgemäß vorgesehen, dass die Reaktionsmischung aus ≥ 7 Austragsöffnungen gleichzeitig auf die Deckschicht aufgetragen wird. Je höher die Anzahl der Austragsöffnungen ist, desto geringer werden die Abweichungen der Produktqualität im Querschnitt des erhaltenen Verbundelements (quer zur Bewegungsrichtung der Deckschicht gesehen) ausfallen. Vorzugsweise wird die Reaktionsmischung aus 8 Austragsöffnungen gleichzeitig auf die Deckschicht aufgetragen, mehr bevorzugt aus ≥ 12 Austragsöffnungen gleichzeitig auf die Deckschicht aufgetragen, noch mehr bevorzugt aus ≥ 15 Austragsöffnungen.

Die erfindungsgemäße Vorrichtung ist zur Durchführung des erfindungsgemäßen Verfahrens geeignet. In einer solchen erfindungsgemäßen Vorrichtung zum Auftragen einer schäumbaren Reaktionsmischung auf eine sich bewegende Deckschicht, wobei die Reaktionsmischung aus Austragsöffnungen auf die Deckschicht aufgetragen wird, umfasst die Vorrichtung ≥ 7 Austragsöffnungen. Vorzugsweise umfasst die Vorrichtung ≥ 8 Austragsöffnungen, mehr bevorzugt ≥ 12 und noch mehr bevorzugt ≥ 15 Austragsöffnungen.

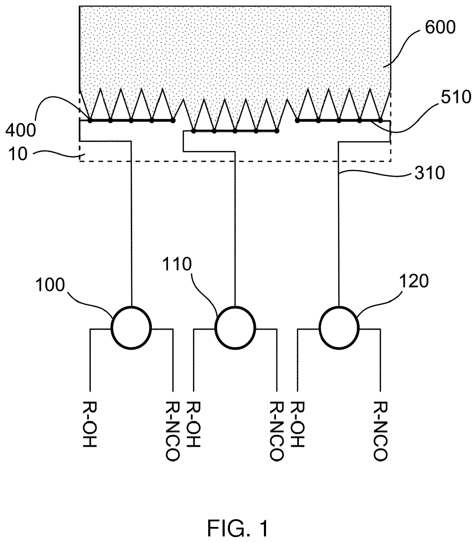

Die vorliegende Erfindung wird anhand der nachfolgenden Figuren näher erläutert, ohne jedoch darauf beschränkt zu sein. FIG. 1 zeigt eine nicht erfindungsgemäße Vorrichtung, 2 und 3 zeigen erfindungsgemäße Vorrichtungen bei der Durchführung von erfindungsgemäßen Verfahren.

Die erfindungsgemäße Vorrichtung umfasst
- Eine Mehrzahl von Mischköpfen 100, 110, 120, wobei jeder Mischkopf eingerichtet ist, um zwei oder mehr Eduktströme zu einem Produktstrom zu mischen;
- Eine Mehrzahl von Gießharken 510, wobei die Anzahl der Gießharken der Anzahl der Mischköpfe 100, 110, 120 entspricht, jede Gießharke mit einem Produktstrom eines Mischkopfs verbunden ist und jede Gießharke ≥ 4 Austragsöffnungen 400 aufweist.

Hier einsetzbare Gießharken können beispielsweise als Einzelgießharke oder Gießharkenpaare, wie in EP 1 857 248 A2, EP 2 614 944 A1 oder EP 2 804 736 A1 beschrieben, ausgeführt sein. Der Zulauf zu der/den Gießharken kann beispielsweise mittig oder seitlich sein. Hier dargestellt ist ein Vorrichtung mit drei Mischköpfen 100, 110 und 120. Jeder dieser drei Mischköpfe empfängt einen Produktstrom mit einer Polyolkomponente R-OH und einen Produktstrom mit einer Isocyanatkomponente R-NCO. Die Bezeichnungen R-OH und R-NCO stehen selbstverständlich nicht für Monoalkohole und Monoisocyanate, sondern allgemein für Polyole und Polyisocyanate und in diesen Eduktströmen weiterhin vorhandenen Treibmitteln und sonstigen Additiven.

Die Mischköpfe 100, 110, 120 vereinigen ihre Eduktströme zu Produktströmen. Die Produktströme enthalten somit die schäumbare Reaktionsmischung. Die Reaktionsmischung verlässt die Mischköpfe über Austragsleitungen 310, welche jeweils in Gießharken 510 enden. In der in FIG. 1 nicht erfindungsgemäßen dargestellten Ausführungsform weist jede Gießharke fünf Austragsöffnungen 400 auf.

Die drei Gießharken 510 sind in FIG. 1 im Wesentlichen nebeneinander angeordnet. Dass die mittlere Gießharke etwas nach hinten versetzt ist, soll die Umstände verdeutlichen, dass solche Gießharken gewisse Raumerfordernisse haben, die eine Positionierung direkt nebeneinander gegebenenfalls ausschließen.

Die Reaktionsmischung verlässt die einzelnen Austragsöffnungen 400 der Gießharken 510 und kontaktiert eine durch ihren gestrichelten Umriss dargestellte, sich von den Austragsöffnungen fortbewegende Deckschicht 10 im Wesentlichen in ihrer gesamten Breite. Durch die Expansion der schäumenden Reaktionsmischung vereinigen sich die einzelnen Streifen der Reaktionsmischung zur Schaumschicht 600 auf der Deckschicht 10.

Das mit der zuvor diskutierten Vorrichtung durchführbare erfindungsgemäße Verfahren umfasst weiterhin die Schritte:
- Bereitstellen einer Mehrzahl von Mischköpfen 100, 110, 120, wobei jeder Mischkopf eingerichtet ist, um zwei oder mehr Eduktströme zu einem Produktstrom zu mischen;
- Bereitstellen einer Mehrzahl von Gießharken 510, wobei die Anzahl der Gießharken der Anzahl der Mischköpfe 100, 110, 120 entspricht, jede Gießharke mit einem Produktstrom eines Mischkopfs verbunden ist und jede Gießharke ≥ 4 Austragsöffnungen 400 aufweist;
- Mischen von zwei oder mehr Eduktströmen in jedem der Mischköpfe 100, 110, 120 unter Erhalt eines jeden der Mischköpfe verlassenden Produktstroms, wobei der Produktstrom eine schäumbare Reaktionsmischung umfasst;
- Auftragen der Reaktionsmischung aus den Austragsöffnungen 400 der Gießharken 510 auf die Deckschicht 10.

Die Anzahl der Mischköpfe in diesen Ausführungsformen des erfindungsgemäßen Systems und des erfindungsgemäßen Verfahrens kann 2, 3 (wie hier dargestellt), 4, 5, 6 oder noch größer sein. Die Anzahl der Gießharken kann 2, 3 (wie hier dargestellt), 4, 5, 6 oder noch größer sein. Die Anzahl der Öffnungen pro Gießharke kann 4, 5 (wie hier dargestellt), 6, 7, 8, 9, 10 oder noch größer sein.

Hier einsetzbare Gießharken können beispielsweise als Einzelgießharke oder Gießharkenpaare, wie in EP 1 857 248 A2, EP 2 614 944 A1 oder EP 2 804 736 A1 beschrieben, ausgeführt sein. Der Zulauf zu der/den Gießharken kann beispielsweise mittig oder seitlich sein. Diese Auftragsmethodik kann für die Herstellung von Metallpaneel-Sandwichverbundelementen, Dämmplatten und Konti-Blöcken verwendet werden.

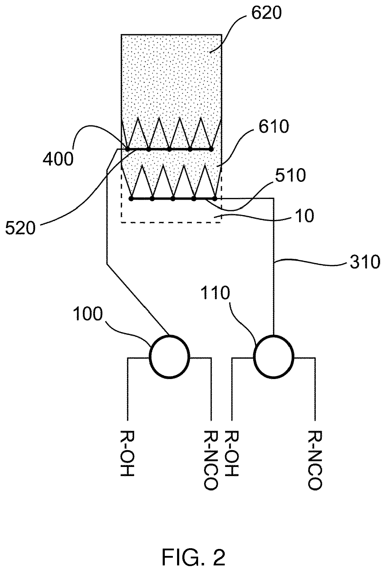

Unter Bezugnahme auf FIG. 2 soll eine erfindungsgemäße Ausführungsform der erfindungsgemäßen Vorrichtung und des erfindungsgemäßen Verfahrens erläutert werden. In der erfindungsgemäßen Vorrichtung sind wenigstens zwei Gießharken 510, 520 in Bewegungsrichtung der Deckschicht gesehen hintereinander angeordnet.

Die mit dem zuvor diskutierten erfindungsgemäßen Vorrichtung durchführbare Ausführungsform des erfindungsgemäßen Verfahrens hat weiterhin das Merkmal, dass wenigstens zwei Gießharken 510, 520 in Bewegungsrichtung der Deckschicht gesehen (gegebenenfalls leicht versetzt) hintereinander angeordnet sind, so dass die aus den Austragsöffnungen 400 einer Gießharke 510 ausgetragene Reaktionsmischung zumindest teilweise aus den Austragsöffnungen 400 der anderen Gießharke 520 ausgetragene Reaktionsmischung kontaktiert. Es kann, wie in FIG. 2 dargestellt, die aus Gießharke 510 in Strömen austretende Reaktionsmischung zwischen die Ströme aus der anderen Gießharke 520 fließen, so dass man eine noch bessere Verfließung der Ströme erreicht.

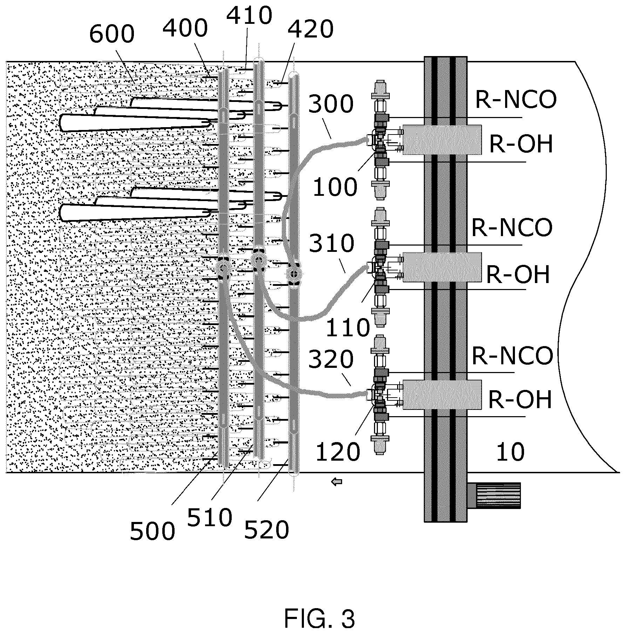

Die maximale Versetzung der Gießharken zueinander ist abhängig von der Anzahl der Gießharken und des Abstands der Austrittsöffnungen. In der erfindungsgemäßen Ausführungsform beträgt die Versetzung der Gießharken zueinander maximal eine Länge, die 50 % des Abstands zweier benachbarter Austrittsöffnungen der Gießharken entspricht. Eine mögliche , ebenfalls bevorzugte Anordnung von drei Gießharken 500,510,520 hintereinander ist in FIG. 3 gezeigt. Diese sind zueinander jeweils um eine Länge versetzt, welche ca. 1/3 des Abstands zweier benachbarter Austrittsöffnungen 400, 410 der Gießharken 500,510,520 entspricht. Hier einsetzbare Gießharken können beispielsweise als Einzelgießharke oder Gießharkenpaare, wie in EP 1 857 248 A2, EP 2 614 944 A1 oder EP 2 804 736 A1 beschrieben, ausgeführt sein. Der Zulauf zu der/den Gießharken kann beispielsweise mittig oder seitlich sein.

Die Anzahl der Mischköpfe in diesen Ausführungsformen des erfindungsgemäßen Systems und des erfindungsgemäßen Verfahrens kann 2, (wie hier dargestellt), 3, 4, 5, 6 oder noch größer sein. Die Anzahl der Gießharken kann 2, (wie hier dargestellt), 3, 4, 5, 6 oder noch größer sein. Die Anzahl der Öffnungen pro Gießharke kann 4, 5 (wie hier dargestellt), 6, 7, 8, 9, 10 oder noch größer sein.

Die Reaktionsmischung verlässt die einzelnen Austragsöffnungen 400 der Gießharken 510 und 520 und kontaktiert eine durch ihren gestrichelten Umriss dargestellte, sich von den Austragsöffnungen fortbewegende Deckschicht 10 im Wesentlichen in ihrer gesamten Breite. Durch die Expansion der schäumenden Reaktionsmischung vereinigen sich die einzelnen Streifen der Reaktionsmischung zu den ineinander fließenden Schaumschichten 610, 620 auf der Deckschicht 10.

Diese Auftragsmethodik kann für die Herstellung von Metallpaneel-Sandwichverbundelementen, Dämmplatten und Konti-Blöcken verwendet werden.

Bei allen ausgeführten Austragsvorrichtungen kann der Auftrag in und gegen die Bandrichtung ausgeführt werden. Selbst in einer Ausführungsform, wie in einer der Figuren dargestellt, kann es vom Vorteil sein, dass nicht alle Gießharken mit dem gleichen Winkel zur Deckschicht platziert werden.

## Patentansprüche

1. Verfahren zum Auftragen einer schäumbaren Reaktionsmischung auf eine sich bewegende Deckschicht (10), wobei die Reaktionsmischung aus Austragsöffnungen (400) auf die Deckschicht aufgetragen wird und die Deckschicht sich mit einer Geschwindigkeit von ≥ 15 Metern pro Minute relativ zu den Austragsöffnungen (400) bewegt,
**dadurch gekennzeichnet, dass**
die Reaktionsmischung aus ≥ 7 Austragsöffnungen (400) gleichzeitig auf die Deckschicht (10) aufgetragen wird und dass das Verfahren weiterhin die Schritte umfasst:
- Bereitstellen einer Mehrzahl von Mischköpfen (100, 110, 120), wobei jeder Mischkopf eingerichtet ist, um zwei oder mehr Eduktströme zu einem Produktstrom zu mischen;
- Bereitstellen einer Mehrzahl von Gießharken (510), wobei die Anzahl der Gießharken der Anzahl der Mischköpfe (100, 110, 120) entspricht, jede Gießharke mit einem Produktstrom eines Mischkopfs verbunden ist und jede Gießharke ≥ 4 Austragsöffnungen (400) aufweist;
- Mischen von zwei oder mehr Eduktströmen in jedem der Mischköpfe (100, 110, 120) unter Erhalt eines jeden der Mischköpfe verlassenden Produktstroms, wobei der Produktstrom eine schäumbare Reaktionsmischung umfasst;
- Auftragen der Reaktionsmischung aus den Austragsöffnungen (400) der Gießharken (510) auf die Deckschicht,
wobei wenigstens zwei Gießharken (510, 520) in Bewegungsrichtung der Deckschicht gesehen hintereinander angeordnet sind und die aus den Austragsöffnungen (400) einer Gießharke (510) ausgetragene Reaktionsmischung zumindest teilweise die aus den Austragsöffnungen (400) der anderen Gießharke (520) ausgetragene Reaktionsmischung kontaktiert,
und die wenigstens zwei Gießharken (510, 520) um eine Länge, welche maximal 50 % des Abstands zweier benachbarter Austragsöffnungen (400) der Gießharken (510, 520) beträgt, versetzt sind,
so dass die aus den Austragsöffnungen (400) einer Gießharke (510) in Strömen austretende Reaktionsmischung zwischen die aus der anderen Gießharke (520) austretenden Ströme der Reaktionsmischung fließt.

2. Verfahren gemäß Anspruch 1, wobei drei Gießharken (500, 510, 520) in Bewegungsrichtung der Deckschicht gesehen hintereinander angeordnet werden.

3. Verfahren gemäß einem der vorhergehenden Ansprüche, wobei die Reaktionsmischung ein Polyol, ein Polyisocyanat und ein Treibmittel umfasst.

4. Vorrichtung zum Auftragen einer schäumbaren Reaktionsmischung auf eine sich bewegende Deckschicht, wobei die Reaktionsmischung aus Austragsöffnungen (400) auf die Deckschicht (10) aufgetragen wird,
**dadurch gekennzeichnet, dass**
die Vorrichtung ≥ 7 Austragsöffnungen (400) umfasst und dass die Vorrichtung weiterhin umfasst:
- Eine Mehrzahl von Mischköpfen (100, 110, 120), wobei jeder Mischkopf eingerichtet ist, um zwei oder mehr Eduktströme zu einem Produktstrom zu mischen;
- Eine Mehrzahl von Gießharken (510), wobei die Anzahl der Gießharken der Anzahl der Mischköpfe (100, 110, 120) entspricht, jede Gießharke mit einem Produktstrom eines Mischkopfs verbunden ist und jede Gießharke ≥ 4 Austragsöffnungen (400) aufweist, wobei wenigstens zwei Gießharken (510, 520) in Bewegungsrichtung der Deckschicht (10) gesehen hintereinander und leicht versetzt zueinander um eine Länge, welche maximal 50 % des Abstands zweier benachbarter Austragsöffnungen (400) der Gießharken (510, 520) beträgt, angeordnet sind.

5. Vorrichtung gemäß Anspruch 4, umfassend drei Gießharken (500, 510, 520).

## Claims

1. Process for applying a foamable reaction mixture onto a moving outerlayer (10), wherein the reaction mixture is applied onto the outerlayer from discharge openings (400) and the outerlayer moves at a speed of ≥ 15 meters per minute relative to the discharge openings (400),
**characterized in that**
the reaction mixture is applied onto the outerlayer (10) from ≥ 7 discharge openings (400) simultaneously, and **in that** the process further comprises the steps of:
- providing a plurality of mixing heads (100, 110, 120), wherein each mixing head is adapted for mixing two or more reactant streams to afford one product stream;
- providing a plurality of rake applicators (510), wherein the number of rake applicators corresponds to the number of mixing heads (100, 110, 120), each rake applicator is connected to a product stream of a mixing head and each rake applicator has ≥ 4 discharge openings (400);
- mixing two or more reactant streams in each of the mixing heads (100, 110, 120) to obtain a product stream exiting each of the mixing heads, wherein the product stream comprises a foamable reaction mixture;
- applying the reaction mixture from the discharge openings (400) of the rake applicators (510) onto the outerlayer,
wherein at least two rake applicators (510, 520) are arranged one behind the other viewed in the direction of motion of the outerlayer and the reaction mixture discharged from the discharge openings (400) of one rake applicator (510) at least partially contacts the reaction mixture discharged from the discharge openings (400) of the other rake applicator (520), and the at least two rake applicators (510, 520) are offset by a length corresponding at a maximum to 50% of the distance between two adjacent discharge openings (400) of the rake applicators (510, 520),
so that the reaction mixture discharged from the discharge openings (400) of a rake applicator (510) in streams flows between streams of the reaction mixture discharged from the other rake applicator (520).

2. Process according to Claim 1, wherein three rake applicators (500, 510, 520) are arranged one behind the other viewed in the direction of motion of the outerlayer.

3. Process according to either of the preceding claims, wherein the reaction mixture comprises a polyol, a polyisocyanate and a blowing agent.

4. Apparatus for applying a foamable reaction mixture onto a moving outerlayer, wherein the reaction mixture is applied onto the outerlayer (10) from discharge openings (400),
**characterized in that**
the apparatus comprises ≥ 7 discharge openings (400), and **in that** the apparatus further comprises:
- a plurality of mixing heads (100, 110, 120), wherein each mixing head is adapted for mixing two or more reactant streams to afford one product stream;
- a plurality of rake applicators (510), wherein the number of rake applicators corresponds to the number of mixing heads (100, 110, 120), each rake applicator is connected to a product stream of a mixing head and each rake applicator has ≥ 4 discharge openings (400), wherein at least two rake applicators (510, 520) are arranged one behind the other viewed in the direction of motion of the outerlayer (10) and offset slightly with respect to one another by a length corresponding at a maximum to 50% of the distance between two adjacent discharge openings (400) of the rake applicators (510, 520).

5. Apparatus according to Claim 4, comprising three rake applicators (500, 510, 520).

## Revendications

1. Procédé pour l'application d'un mélange réactionnel expansible sur une couche de finition mobile (10), le mélange réactionnel étant appliqué sur la couche de finition à partir d'orifices de sortie (400), et la couche de finition se déplaçant à une vitesse ≥ 15 mètres par minute par rapport aux orifices de sortie (400),
**caractérisé en ce que**
le mélange réactionnel est appliqué simultanément à partir de ≥ 7 orifices de sortie (400) sur la couche de finition (10), et **en ce que** le procédé comprend en outre les étapes suivantes :
- fourniture d'un grand nombre de têtes de mélange (100, 110, 120), chaque tête de mélange étant agencée pour mélanger au moins deux courants de matière de départ pour obtenir un courant de produit ;
- fourniture d'un grand nombre de râteaux de coulée (510), le nombre des râteaux de coulée correspondant au nombre des têtes de mélange (100, 110, 120), chaque râteau de coulée étant relié à un courant de produit d'une tête de mélange, et chaque râteau de coulée comprenant ≥ 4 orifices de sortie (400) ;
- mélange d'au moins deux courants de matière de départ dans chacune des têtes de mélange (100, 110, 120) avec obtention d'un courant de produit sortant de chacune des têtes de mélange, le courant de produit comprenant un mélange réactionnel expansible ;
- application du mélange réactionnel sortant des orifices de sortie (400) des râteaux de coulée (510) sur la couche de finition,
dans lequel au moins deux râteaux de coulée (510, 520) sont disposés l'un derrière l'autre dans la direction de déplacement de la couche de finition, et le mélange réactionnel sortant des orifices de sortie (400) d'un râteau de coulée (510) étant au moins partiellement en contact avec le mélange réactionnel sortant des orifices de sortie (400) de l'autre râteau de coulée (520),
et les au moins deux râteaux de coulée (510, 520) subissent un décalage sur une longueur qui est au maximum de 50 % de l'écart entre deux orifices de sortie voisins (400) des râteaux de coulée (510, 520),
de sorte que le mélange réactionnel sortant par courants des orifices de sortie (400) d'un râteau de coulée (510) s'écoule entre les courants du mélange réactionnel sortant de l'autre râteau de coulée (520).

2. Procédé selon la revendication 1, dans lequel trois râteaux de coulée (500, 510, 520) sont disposés les uns derrière les autres dans la direction de déplacement de la couche de finition.

3. Procédé selon l'une des revendications précédentes, dans lequel le mélange réactionnel comprend un polyol, un polyisocyanate et un agent d'expansion.

4. Dispositif destiné à appliquer un mélange réactionnel expansible sur une couche de finition mobile, le mélange réactionnel étant appliqué sur la couche de finition (10) à partir d'orifices de sortie (400), **caractérisé en ce que**
le dispositif comprend ≥ 7 orifices de sortie (400), et **en ce que** le dispositif comprend en outre :
- un grand nombre de têtes de coulée (100, 110, 120), chaque tête de coulée étant agencée pour mélanger au moins deux courants de matière de départ pour obtenir un courant de produit ;
- un grand nombre de râteaux de coulée (510), le nombre des râteaux de coulée correspondant au nombre des têtes de mélange (100, 110, 120), chaque râteau de coulée étant relié à un courant de produit d'une tête de mélange, et chaque râteau de coulée comprenant ≥ 4 orifices de sortie (400), au moins deux râteaux de coulée (510, 520) étant disposés les uns derrière les autres dans le sens de déplacement de la couche de finition (10), et étant légèrement décalés les uns par rapport aux autres d'une longueur qui est au maximum de 50 % de l'écart entre deux orifices de sortie voisins (400) des râteaux de coulée (510, 520).

5. Dispositif selon la revendication 4, comprenant trois râteaux de coulée (500, 510, 520).
